# EUROPEAN PATENT APPLICATION

(11) **EP 4 835 805 A1**
(43) Date of publication of application: **04.11.2026**
(21) Application number: 24913667.2
(22) Date of filing: 27.12.2024
(51) Int. Cl.: G06T 5/80, G06T 3/40

(54) **LIDAR DEVICE AND CORRECTION METHOD**

(30) Priority: 27.12.2023 KR 20230192212; 26.12.2024 KR 20240196996
(71) Applicant: LG Innotek Co., Ltd., Seoul 07796 (KR)
(72) Inventor: LEE, Dong Gun, Seoul 07796 (KR)
(74) Representative: Plasseraud IP
(86) International application number: PCT/KR2024/021262
(87) International publication number: WO 2025/143862

(57) **Abstract**

An embodiment discloses a LiDAR device comprising: an output unit for irradiating light; a receiving unit for receiving light from a chart and generating image information; and a control unit for controlling the output unit and the receiving unit. The control unit recognizes a plurality of dots included in the image information, assigns numbers to the plurality of dots in order, and stores the image information if the numbers assigned to the plurality of dots match the order of dots of an actual chart.

## Description

### [Technical Field]

Embodiments relate to a LiDAR correction method and device.

### [Background Art]

A Light Detection and Ranging (LiDAR) device measures a distance to a target object or forms a shape of the target object using laser pulses emitted from the LiDAR device and then reflected and returned from the target object. LiDAR devices are applied to various technical fields requiring three-dimensional images. For example, LiDAR devices may be applied to various technical fields such as meteorology, aviation, aerospace, vehicles, and the like. In recent years, in the field of autonomous driving, the proportion occupied by LiDAR devices has rapidly increased.

In general, an output unit of a LiDAR device generates an output optical signal that is incident on an object, a receiving unit receives an input optical signal reflected from the object, and an information generating unit generates information about the object using the input optical signal received by the receiving unit.

Meanwhile, image distortion due to a lens may occur in a process in which the LiDAR device receives an input optical signal. Accordingly, a method of correcting such image distortion is required. In the related art, correction has been performed using a checkerboard, but when the checkerboard is used, visible light needs to be used, and thus there is a problem in that a sensor is required to have very high resolution, and in the case of a vehicle LiDAR, there is also a problem in that visible light may not be used because a driver's field of view should not be obstructed.

### [Description of Invention]

### [Technical Problem]

Embodiments provide a LiDAR device capable of correcting lens distortion and a LiDAR correction method.

Embodiments also provide a LiDAR device in which a chart recognition rate is improved during correction of the LiDAR device and a LiDAR correction method.

Embodiments also provide a LiDAR device in which the correction accuracy of the LiDAR device is improved and a LiDAR correction method.

Problems to be solved in the embodiments are not limited to the above-described problems, and objects and effects which can be determined from the technical solutions and embodiments described below are also included.

### [Technical Solution]

According to an embodiment, a LiDAR device includes an output unit configured to emit light, a receiving unit configured to receive light from a chart and generate image information, and a controller configured to control the output unit and the receiving unit, in which the controller may recognize a plurality of dots included in the image information, sequentially assign numbers to the plurality of recognized dots, and, when the numbers assigned to the plurality of dots correspond to an order of dots of an actual chart, store the corresponding image information.

The controller may upscale the image information and recognize a plurality of dots included in the upscaled image information.

When the plurality of dots included in the image information are not recognized, the controller may rearrange positions of the plurality of dots of the image information through principal component analysis (PCA).

The controller may sequentially assign numbers to the plurality of rearranged dots.

The receiving unit may receive the light at a plurality of different positions and generate image information for the light received at each of the plurality of different positions.

When a predetermined number or more pieces of the image information received at each of the plurality of different positions are stored, the controller may calculate a parameter and correct distortion of the image information.

The controller may perform Fast Foutier Transform (FFT) on an X-axis and a Y-axis of the image information to obtain first data and perform zero-padding on the first data.

The controller may perform inverse FFT on the first data on which the zero-padding is performed to obtain second data and obtain the upscaled image information by taking only a real part of the second data and then rounding the real part to one decimal place.

The first data may be spatial frequency component data, and the second data may be complex float data.

Angles formed by the receiving unit and the chart according to the plurality of different positions may be different from each other, and when the number of pieces of the stored image information is 20 or more, , the controller may calculate the parameter and correct the distortion of the image information.

The plurality of dots may be disposed at regular intervals according to a plurality of rows and columns on the chart, and when dots included in different rows among the plurality of dots included in the image information overlap each other in a row direction, the controller may rearrange positions of the plurality of dots of the image information.

According to an embodiment, a LiDAR correction method may include generating, by a receiving unit, image information for a chart by photographing the chart including a plurality of dots, upscaling, by a controller, the image information for the chart, recognizing, by the controller, the plurality of dots, assigning, by the controller, a number to each of the plurality of dots, and sequentially rearranging, by the controller, the numbers assigned to the plurality of dots.

The LiDAR correction method may include determining, by the controller, whether the numbers assigned to the plurality of dots correspond to an order of dots of an actual chart.

The LiDAR correction method may include storing, by the controller, the image information and calculating, by the controller, a parameter when the number of pieces of the stored image information is 20 or more.

The sequentially rearranging, by the controller, of the numbers assigned to the plurality of dots may include rearranging, by the controller, positions of the plurality of dots of the image information through PCA.

### [Advantageous Effects]

According to embodiments, a LiDAR device capable of correcting lens distortion and a LiDAR correction method can be provided.

In addition, a LiDAR device in which a chart recognition rate is improved during correction of the LiDAR device and a LiDAR correction method can be provided.

In addition, a LiDAR device in which the correction accuracy of the LiDAR device is improved and a LiDAR correction method can be provided.

Various beneficial advantages and effects of the present invention are not limited by the contents described above and should be easily understood through a description of a detailed embodiment of the present invention.

### [Description of Drawings]

FIG. 1 is a configuration diagram of a LiDAR device according to an embodiment.
FIG. 2 is a schematic diagram of a chart in a LiDAR correction method according to an embodiment.
FIG. 3 is a schematic diagram illustrating appearances of a LiDAR device and a chart according to an embodiment.
FIG. 4 is a flowchart of a LiDAR correction method according to an embodiment.
FIG. 5 is a flowchart of a LiDAR correction method according to another embodiment.
FIG. 6 is a flowchart of the LiDAR correction method according to another embodiment.
FIG. 7 is a set of views illustrating a chart recognition rate according to a LiDAR correction method according to an embodiment.
FIGS. 8 and 9A to 9E are views for describing an image rearrangement method in a LiDAR correction method according to an embodiment.
FIG. 10 is a flowchart of a LiDAR correction method according to an embodiment.

### [Modes of the Invention]

Hereinafter, exemplary embodiments of the present invention will be described in detail with reference to the accompanying drawings.

However, the technical idea of the present invention is not limited to some embodiments to be described but may be implemented in various different forms, and within the scope of the technical idea of the present invention, one or more among components in the embodiments may be used by being selectively combined and substituted.

Further, unless specifically defined and described, terms used in the embodiments of the present invention (including technical and scientific terms) may be interpreted as having meanings which are generally understood by those skilled in the art to which the present invention pertains, and commonly used terms such as terms defined in dictionaries may be interpreted in consideration of the contextual meaning of the related art.

The terms used in the embodiments of the present invention are for the purpose of describing the embodiments only and are not intended to limit the invention.

In the present specification, the singular form may include the plural forms unless the context clearly dictates otherwise, and when described as "at least one (or one or more) among A, B, and (or) C," it may include one or more of all possible combinations of A, B, and C.

In addition, when describing components of embodiments of the present invention, terms such as first, second, A, B, (a), (b), etc., may be used.

These terms are only for distinguishing the components from other components, and the essence, sequence, or order of the components is not limited by these terms.

In addition, when a component is described as being "linked," "coupled," or "connected" to another component, the component is not only directly linked, coupled, or connected to another component, but also "linked," "coupled," or "connected" to another component with still another component disposed between the component and the other component.

Further, when a component is described as being formed or disposed "on (above) or below (under)" another component, the term "on (above) or under (below)" includes not only when two components are in direct contact with each other, but also when one or more other components are formed or disposed between the two components. Further, when a component is described as being "on (above) or below (under)," the description may include the meanings of an upward direction and a downward direction based on one component.

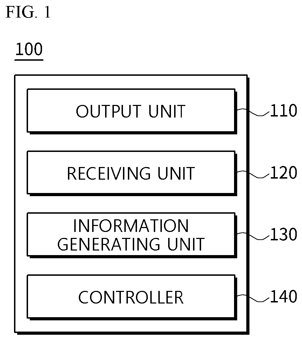

FIG. 1 is a configuration diagram of a LiDAR device according to an embodiment.

Referring to FIG. 1, a LiDAR device 100 according to the embodiment of the present invention may include an output unit 110, a receiving unit 120, an information generating unit 130, and a controller 140.

The output unit 110 may generate and output an output optical signal in the form of a pulse wave or in the form of a continuous wave. The continuous wave may be in the form of a sinusoid wave or a squared wave. By generating the output optical signal in the form of a pulse wave or a continuous wave, the LiDAR device 100 may detect a time difference or a phase difference between the output optical signal output from the output unit 110 and an input optical signal reflected from a target region and then input to the receiving unit 120. The output unit 110 includes a light source and a lens group.

The lens group may collect light output from the light source and output the collected light to the outside. The lens group may be disposed on an upper side of the light source to be spaced apart from the light source. Here, the "upper side of the light source" may refer to a side of the light source from which light is emitted. The lens group may include at least one lens, and when the lens group includes a plurality of lenses, each of the lenses may be aligned based on a central axis to form an optical system. Here, the central axis may be the same as an optical axis of the optical system. The lens group may also include a diffusion member that receives light output from the light source and then refracts or diffracts the received light and outputs the light.

The receiving unit 120 may receive an optical signal reflected from the target region. In this case, the received optical signal may be a reflection, from the target region, of the optical signal emitted by the output unit 110. The receiving unit 120 includes an image sensor, a filter disposed on the image sensor, and a lens group disposed on the filter. The receiving unit 120 may include a single-photon avalanche diode (SPAD) sensor.

The optical signal reflected from the target region may pass through the lens group of the receiving unit 120. An optical axis of the lens group of the receiving unit 120 may be aligned (align) with the optical axis of the image sensor. The filter may be disposed between the lens group of the receiving unit 120 and the image sensor. The filter may be disposed on an optical path between the target region and the image sensor. The filter may filter light having a predetermined wavelength range. The filter may transmit light of a specific wavelength. For example, the filter may transmit light in an infrared band and block light outside the infrared band. The image sensor may receive an optical signal and output the received optical signal as an electrical signal. The image sensor may detect light having a wavelength corresponding to a wavelength of light output from the output unit 110. For example, the image sensor may detect light in the infrared band. The image sensor may be configured as a structure in which a plurality of pixels are arranged in a grid form.

The information generating unit 130 generates information on the target region using the input optical signal input to the receiving unit 120. The information on the target region may include three-dimensional information on the target region. For example, the information on the target region may include depth information on the target region.

The controller 140 controls driving of the output unit 110, the receiving unit 120, and the information generating unit 130. The information generating unit 130 and the controller 140 may be implemented in the form of a printed circuit board (PCB). In addition, the information generating unit 130 and the controller 140 may be implemented in other forms. Alternatively, the controller 140 may be included in a terminal or a vehicle in which the LiDAR device 100 according to the embodiment of the present invention is disposed. For example, the controller 140 may be implemented in the form of an application processor (AP) of a smartphone equipped with the LiDAR device 100 according to the embodiment of the present invention, or may be implemented in the form of an electronic control unit (ECU) of a vehicle equipped with the LiDAR device 100 according to the embodiment of the present invention.

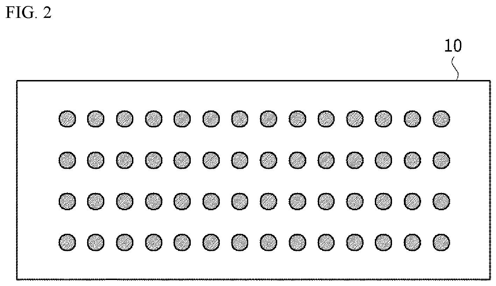

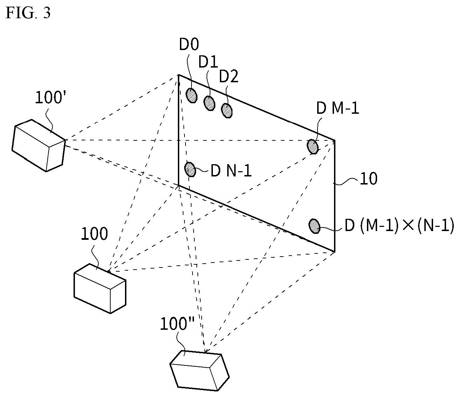

FIG. 2 is a schematic diagram of a chart in a LiDAR correction method according to an embodiment, and FIG. 3 is a schematic diagram illustrating appearances of a LiDAR device and a chart according to the embodiment.

Referring to FIGS. 2 and 3, a LiDAR correction method according to the embodiment may use a chart 10. The chart 10 may include an LED chart. The chart 10 may include a plurality of dots D. The plurality of dots D may include LED dots. The plurality of dots D may emit light. For example, the plurality of dots D may emit infrared light. The LiDAR device 100 may receive light emitted by the plurality of dots D of the chart 10. Specifically, the receiving unit of the LiDAR device 100 may receive light emitted by the plurality of dots D. The plurality of dots D may be disposed on the chart 10 to be spaced apart from each other at regular intervals. For example, M dots D₀ to D_{M-1} may be disposed at regular intervals in a horizontal direction. In addition, N dots D₀ to D_{N-1} may be disposed at regular intervals in a vertical direction. In this case, a total of M*N dots may be disposed at regular intervals on the chart 10. Each of the plurality of dots D may emit light. The LiDAR device 100 may be disposed to be spaced apart from the chart 10 by a predetermined interval. In addition, a position and angle of the LiDAR device 100 may be changed for LiDAR correction (100' and 100''). As the position and angle of the LiDAR device 100 are changed, the LiDAR device 100 may photograph the chart 10 at different positions and angles. Accordingly, the LiDAR device 100 may generate different image information at different positions and angles.

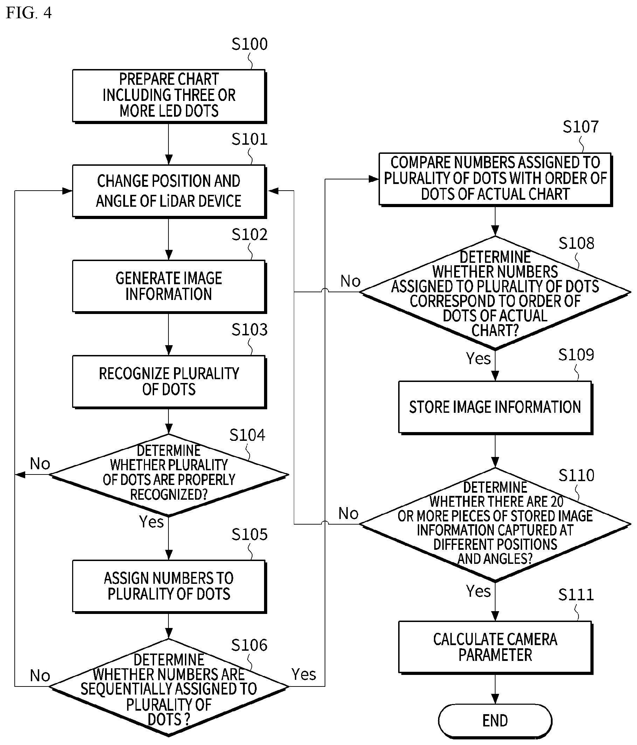

FIG. 4 is a flowchart of a LiDAR correction method according to an embodiment.

Referring to FIG. 4, first, a chart including three or more LED dots may be prepared (S100). The chart may include three or more dots. As described above with reference to FIGS. 2 and 3, the three or more dots may form a plurality of rows and columns and may be disposed to be spaced apart from each other at regular intervals.

Next, the position and angle of the LiDAR device may be changed (S101). The position and angle at which the chart is photographed may be adjusted by changing the position and angle of the LiDAR device.

After the position and angle of the LiDAR device are changed, the LiDAR device may photograph the chart and generate image information (S102). The receiving unit of the LiDAR device may receive light from the chart. The receiving unit may receive light and generate image information for the chart.

The controller of the LiDAR device may recognize a plurality of dots included in the image information (S103). The controller may recognize a plurality of dots included in an image of the photographed chart in the image information. The controller may recognize dots through a blob detection algorithm. Thereafter, the controller may determine whether the plurality of dots are properly recognized (S104). After determining whether the plurality of dots are properly recognized, when it is determined that the plurality of dots are not properly recognized, the controller may change the position and angle of the LiDAR device again and regenerate image information.

After determining whether the plurality of dots are properly recognized, when it is determined that the plurality of dots are properly recognized, the controller may assign numbers to the plurality of dots (S105). Thereafter, the controller may determine whether numbers are sequentially assigned to the plurality of dots (S106). When it is determined that numbers are not sequentially assigned to the plurality of dots, the controller may change the position and angle of the LiDAR device again and regenerate image information.

When it is determined that numbers are sequentially assigned to the plurality of dots, the controller may compare the numbers assigned to the plurality of dots with the order of dots of an actual chart (S107). Thereafter, the controller may determine whether the numbers assigned to the plurality of dots correspond to the order of the dots of the actual chart (S108). When it is determined that the numbers assigned to the plurality of dots do not correspond to the order of the dots of the actual chart, the controller may change the position and angle of the LiDAR device again and regenerate image information.

When it is determined that the numbers assigned to the plurality of dots correspond to the order of the dots of the actual chart, the controller may store the corresponding image information (S109). Thereafter, the controller may determine whether there are 20 or more pieces of stored image information captured at different positions and angles of the LiDAR device (S110). When it is determined that the number of pieces of image information is not 20 or more, the controller may change the position and angle of the LiDAR device again and regenerate image information.

When it is determined that there are 20 or more pieces of image information, the controller may calculate a parameter (S111). The controller may calculate a parameter based on the image information and perform correction of the LiDAR device. The LiDAR device according to the embodiment may improve a recognition rate of dots by sensing infrared rays using the chart that emits infrared rays, and may perform correction of LiDAR even when a low-resolution sensor is used. In addition, a method of correcting LiDAR in the LiDAR device according to an embodiment may be used in a vehicular dToF LiDAR using light in an infrared region band rather than a visible light region.

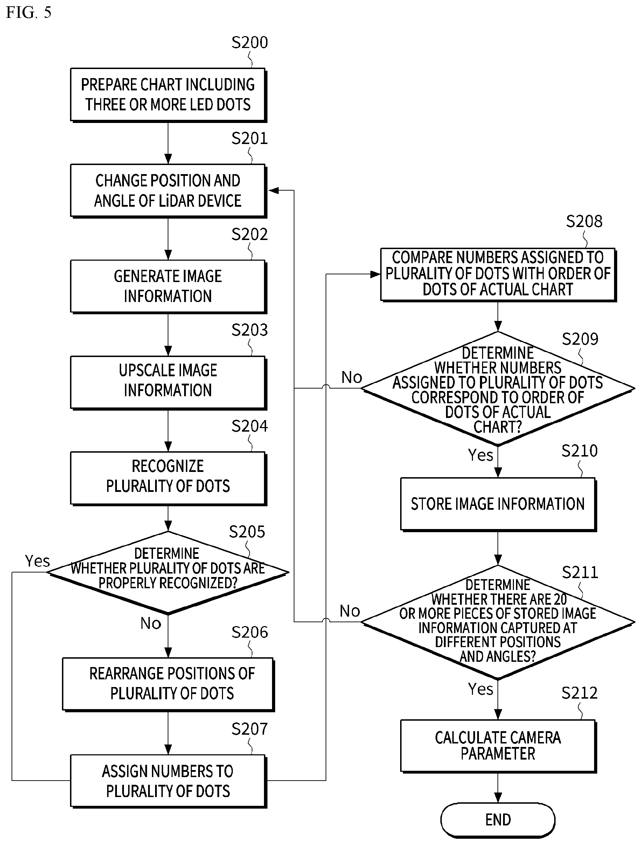

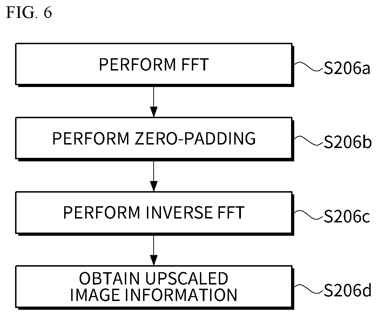

FIGS. 5 and 6 are flowcharts of a LiDAR correction method according to another embodiment.

Referring to FIG. 5, first, a chart including three or more LED dots may be prepared (S200). The chart may include three or more dots. As described above with reference to FIGS. 2 and 3, the three or more dots may form a plurality of rows and columns and may be disposed to be spaced apart from each other at regular intervals.

Next, the position and angle of the LiDAR device may be changed (S201). The position and angle at which the chart is photographed may be adjusted by changing the position and angle of the LiDAR device.

After the position and angle of the LiDAR device are changed, the LiDAR device may photograph the chart and generate image information (S202). The receiving unit of the LiDAR device may receive light from the chart. The receiving unit may receive light and generate image information for the chart.

The controller may perform upscaling on the generated image information (S203). The controller may perform upscaling on the generated image information to improve the dot recognition rate of the controller. The upscaled image information may have an increased resolution.

FIG. 6 illustrates a detailed flowchart of a method (S203) of upscaling image information by the controller. First, the controller may perform Fast Foutier Transform (FFT) (S203a). The controller may perform FFT on an X-axis and a Y-axis of the image information to obtain first data. The first data may be spatial frequency component data. Thereafter, the controller may perform zero-padding on the first data (S203b). The controller may perform zero-padding on the first data to add higher spatial frequency components as 0. Thereafter, the controller may perform inverse FFT (S203c). The controller may perform inverse FFT on the first data on which zero-padding is performed to obtain second data. Specifically, the controller may apply 2D inverse FFT again to the zero-padded first data to obtain second data. The second data may be complex float data. Thereafter, the controller may obtain upscaled image information (S203d). Specifically, the controller may obtain the upscaled image information by taking only a real part of the second data and then rounding the real part to one decimal place. The upscaled image information generated according to the image information upscaling method according to the embodiment may be 256 bit integer data. When the controller upscales the image information according to the embodiment, high-resolution image information may be obtained, thereby improving the recognition rate of the image information, and the image information may be accurately corrected even with a low-performance sensor.

The controller of the LiDAR device may recognize a plurality of dots included in the upscaled image information (S204). The controller may recognize a plurality of dots included in an image of the photographed chart in the upscaled image information. The controller may recognize dots through a blob detection algorithm. Thereafter, the controller may determine whether the plurality of dots are properly recognized (S105).

After determining whether the plurality of dots are properly recognized, when it is determined that the plurality of dots are not properly recognized, the controller may rearrange positions of the plurality of dots (S206). When the plurality of dots included in the image information are not recognized, the controller may rearrange positions of the plurality of dots of the image information through principal component analysis (PCA). The controller may obtain principal axes through principal component analysis and redefine the principal axes as basis vectors of the plurality of dots. After rearranging principal components of the plurality of dots, the controller may rearrange numbers of the plurality of dots. Thereafter, the controller may return the principal components of the plurality of dots to an existing state. After determining whether the plurality of dots are properly recognized, when it is determined that the plurality of dots are properly recognized, the controller may assign numbers to the plurality of dots (S207). The LiDAR device may improve the recognition rate of the chart in a correction process of the LiDAR device by rearranging positions of the plurality of dots through principal component analysis, and accordingly, may improve the correction accuracy of the LiDAR device. A case in which positions of the plurality of dots of the image information are rearranged through principal component analysis may be used when the LiDAR device photographs the chart at a different angle. Even when the LiDAR device photographs the chart at a rotated angle, the plurality of dots of the image information may be arranged in a horizontal direction, as in a case in which the LiDAR device photographs the chart with the angle set horizontally.

After determining whether the plurality of dots are properly recognized, when it is determined that the plurality of dots are properly recognized or when positions of the plurality of dots are rearranged, the controller may assign numbers to the plurality of dots (S207). The controller may assign numbers to the plurality of dots and compare the numbers assigned to the plurality of dots with the order of dots of the actual chart (S208). Thereafter, the controller may determine whether the numbers assigned to the plurality of dots correspond to the order of dots of the actual chart (S209). When it is determined that the numbers assigned to the plurality of dots do not correspond to the order of dots of the actual chart, the controller may change the position and angle of the LiDAR device again and regenerate image information.

When it is determined that the numbers assigned to the plurality of dots correspond to the order of the dots of the actual chart, the controller may store the corresponding image information (S210). Thereafter, the controller may determine whether 20 or more pieces of stored image information captured at different positions and angles of the LiDAR device (S211). When it is determined that the number of pieces of image information is not 20 or more, the controller may change the position and angle of the LiDAR device again and regenerate image information.

When it is determined that there are 20 or more pieces of image information, the controller may calculate a parameter (S212). The controller may calculate a parameter based on the image information and perform correction of the LiDAR device. The LiDAR device according to the embodiment may improve the recognition rate of dots by sensing infrared rays using the chart that emits infrared rays, and may perform correction of LiDAR even when a low-resolution sensor is used. In addition, a method of correcting LiDAR in the LiDAR device according to an embodiment may be used in a vehicular dToF LiDAR using light in an infrared region band rather than a visible light region.

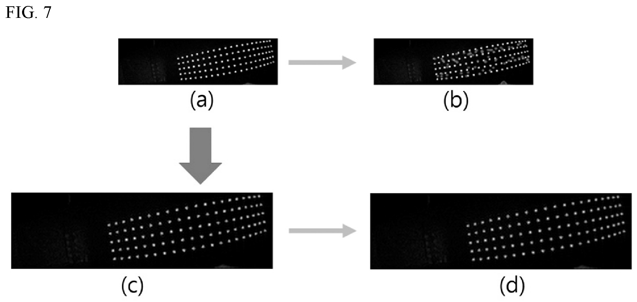

FIG. 7 is a set of views illustrating a chart recognition rate according to a LiDAR correction method according to an embodiment.

FIG. 7A illustrates image information before the controller performs upscaling on chart image information. Referring to FIG. 7A, the image information before upscaling is performed may have a low resolution. FIG. 7B illustrates a recognition rate of dots of the image information before upscaling is performed. Referring to FIG. 7B, the image information before upscaling is performed may have a low recognition rate of dots. FIG. 7C illustrates image information after the controller performs upscaling on the image information for the chart. Referring to FIG. 7C, the image information after upscaling is performed may have a high resolution. FIG. 7D illustrates a recognition rate of dots of the image information after upscaling is performed. Referring to FIG. 7D, the image information after upscaling is performed may have an improved recognition rate of dots compared to before upscaling is performed.

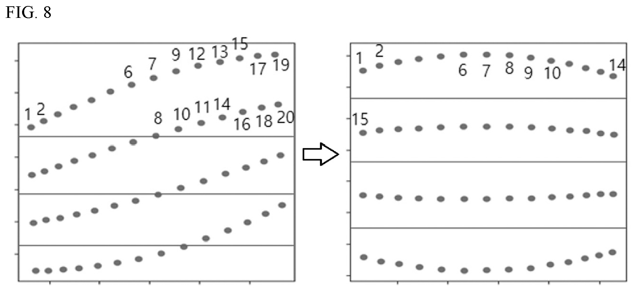

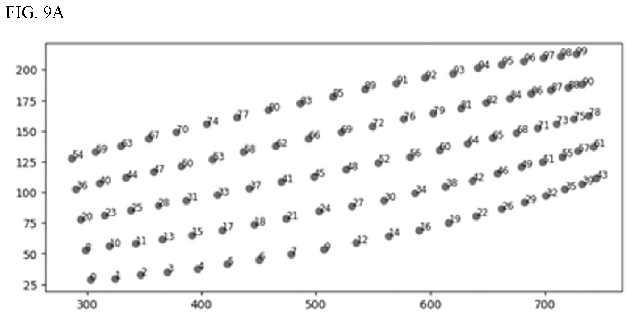

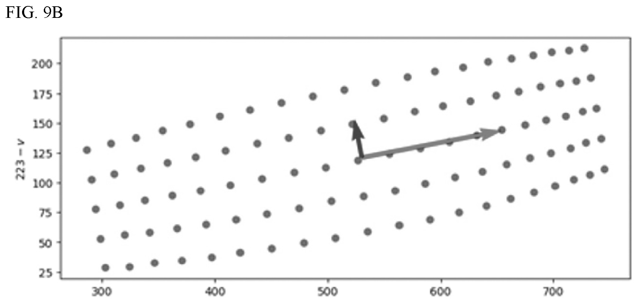

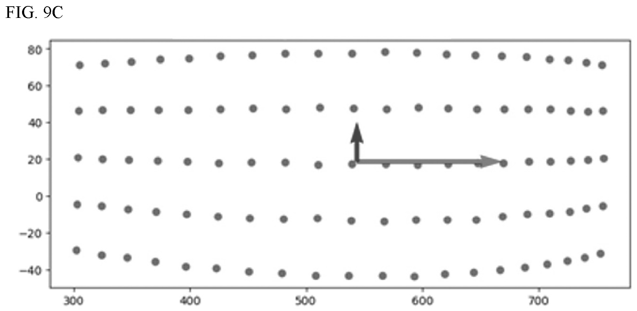

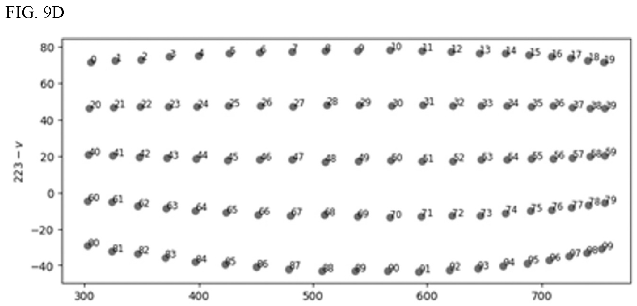

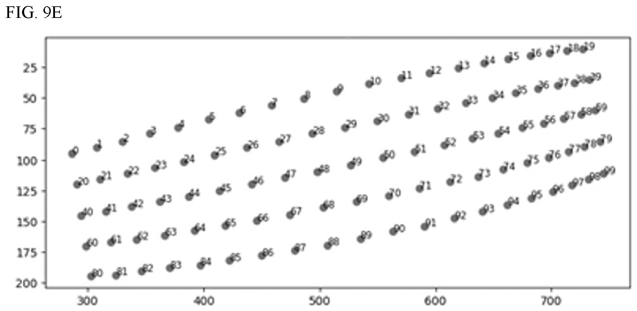

FIGS. 8 and 9 are views for describing an image rearrangement method in a LiDAR correction method according to an embodiment.

FIG. 8A illustrates a state before the controller rearranges positions of a plurality of dots. When the LiDAR device photographs the chart at a non-horizontal position and angle, as illustrated in FIG. 8A, the plurality of dots on the chart may be photographed as being inclined at a predetermined angle rather than horizontally. In this case, during a process of numbering the plurality of dots, the plurality of dots may be photographed obliquely, and thus may be recognized in an incorrect dot order. In image information for the photographed chart, the chart may be divided into an arbitrary plurality of regions. Boundaries of the regions may be formed in a row direction in which the plurality of dots are arranged. In this case, when the plurality of dots are not arranged in a parallel direction but are arranged in an inclined manner, a plurality of dots arranged in the same row may be located in different regions. For example, in FIG. 8A, some of a plurality of dots located in the second row may be located in a first-row region and may be recognized in a process of aligning a plurality of dots in the first-row region, thereby causing an error in alignment (for example, in FIG. 8A, dots aligned as 8, 10, 11, 14, 16, 18, and 20 may be incorrectly recognized dots.).

As described above, when dots included in different rows among a plurality of dots included in the image information overlap each other in the row direction, the controller may rearrange positions of the plurality of dots of the image information.

FIG. 8B illustrates a state after the controller rearranges positions of the plurality of dots. In this case, the plurality of dots may be rearranged so as not to be oblique, and the dots may be sequentially and accurately recognized.

FIG. 9A illustrates a state before the controller rearranges positions of a plurality of dots. When the LiDAR device photographs the chart at a non-horizontal position and angle, as illustrated in FIG. 9A, the plurality of dots on the chart may be photographed as being inclined at a predetermined angle rather than horizontally. FIG. 9B illustrates a process in which the controller obtains principal axes through principal component analysis and redefines the principal axes as basis vectors of the plurality of dots. In order to align an arrangement direction of the plurality of dots with the horizontal direction, a direction in which the plurality of inclined dots are arranged may be tracked. FIG. 9C illustrates a state in which the controller rearranges principal components of the plurality of dots. By rearranging the principal components of the plurality of dots, an arrangement direction in which the plurality of dots are arranged may be rearranged to the horizontal direction. FIG. 9D illustrates a state in which the controller rearranges the plurality of dots. When the principal components of the plurality of dots are rearranged, the plurality of dots may be arranged along a plurality of rows and columns, and in this case, numbers may be assigned to all dots by starting numbering in a row direction from a first column of a first row. FIG. 9E illustrates a state in which the principal components return to the existing state again after the plurality of dots are rearranged. When image rearrangement is performed in a process of correcting the LiDAR device according to the embodiment, even when the chart is photographed with the position and angle of the LiDAR device adjusted, it is possible to prevent a case in which image information is inclined and dots are not recognized. Accordingly, the recognition rate of the chart may be improved, thereby improving the accuracy of correction.

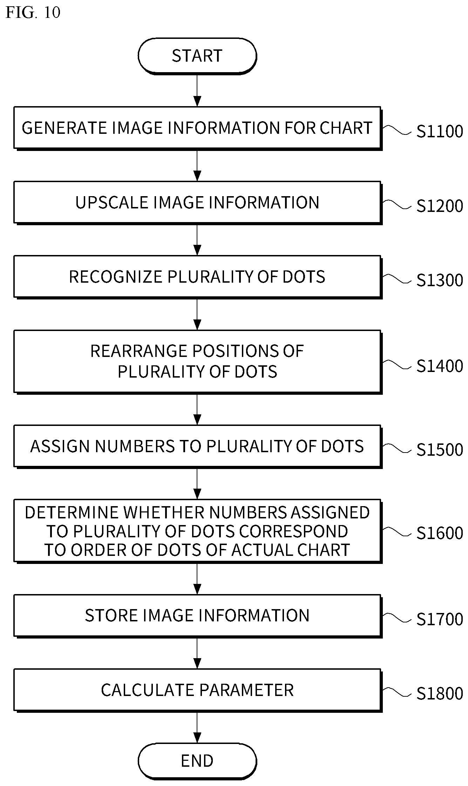

FIG. 10 is a flowchart of a LiDAR correction method S1000 according to an embodiment.

Referring to FIG. 10, the LiDAR correction method S1000 according to the embodiment may include generating image information for a chart (S1100), upscaling the image information (S1200), recognizing a plurality of dots (S1300), rearranging positions of the plurality of dots (S1400), assigning numbers to the plurality of dots (S1500), determining whether numbers assigned to the plurality of dots correspond to the order of dots of an actual chart (S1600), storing the image information (S1700), and calculating a parameter (S1800). Sequentially rearranging numbers assigned to the plurality of dots (S1500) may include an operation of rearranging, by the controller, positions of the plurality of dots of the image information through principal component analysis (PCA).

The receiving unit may generate the image information for the chart. The controller may upscale the image information generated by the receiving unit. The controller may recognize the plurality of dots from the upscaled image information. When the plurality of recognized dots are not properly recognized, the controller may rearrange positions of the plurality of dots. The controller may assign numbers to the plurality of rearranged dots. The controller may determine whether the numbers assigned to the plurality of dots correspond to the order of dots of the actual chart. Thereafter, when the numbers assigned to the plurality of dots correspond to the order of the actual order, the controller may store the corresponding image information. When there are 20 or more pieces of stored image information, the controller may calculate the parameter and perform the correction of the LiDAR device. The LiDAR correction method according to the embodiment may be used for the LiDAR device to which a lens is applied and may correct distortion caused by the lens.

Although the description has been described above with reference to embodiments, the embodiments are merely examples and do not limit the present invention, and those skilled in the art to which the embodiments pertain will appreciate that various modifications and applications not illustrated above may be made without departing from essential characteristics of the embodiments. For example, each constituent element specifically illustrated in the embodiments may be modified for implementation. It should be construed that differences associated with such modifications and applications fall within the scope of the embodiments defined by the appended claims.

## Claims

1. A LiDAR device comprising:
an output unit configured to emit light;
a receiving unit configured to receive light from a chart and generate image information; and
a controller configured to control the output unit and the receiving unit,
wherein the controller recognizes a plurality of dots included in the image information, sequentially assigns numbers to the plurality of recognized dots, and, when the numbers assigned to the plurality of dots correspond to an order of dots of an actual chart, stores the corresponding image information.

2. The LiDAR device of claim 1, wherein the controller upscales the image information and recognizes a plurality of dots included in the upscaled image information.

3. The LiDAR device of claim 2, wherein, when the plurality of dots included in the image information are not recognized, the controller rearranges positions of the plurality of dots of the image information through principal component analysis (PCA).

4. The LiDAR device of claim 3, wherein the controller sequentially assigns numbers to the plurality of rearranged dots.

5. The LiDAR device of claim 4, wherein the receiving unit receives the light at a plurality of different positions and generates image information for the light received at each of the plurality of different positions.

6. The LiDAR device of claim 5, wherein, when a predetermined number or more pieces of the image information received at each of the plurality of different positions are stored, the controller calculates a parameter and corrects distortion of the image information.

7. The LiDAR device of claim 2, wherein the controller performs Fast Foutier Transform (FFT) on an X-axis and a Y-axis of the image information to obtain first data and performs zero-padding on the first data.

8. The LiDAR device of claim 7, wherein the controller performs inverse FFT on the first data on which the zero-padding is performed to obtain second data and obtains the upscaled image information by taking only a real part of the second data and then rounding the real part to one decimal place.

9. The LiDAR device of claim 8, wherein the first data is spatial frequency component data and
the second data is complex float data.

10. The LiDAR device of claim 6, wherein angles formed by the receiving unit and the chart according to the plurality of different positions are different from each other, and
when the number of pieces of the stored image information is 20 or more, the controller calculates the parameter and corrects the distortion of the image information.
